(19) Europäisches Patentamt
European Patent Office
Office européen des brevets

(11) Veröffentlichungsnummer: **0 528 267 A1**

# (12) EUROPÄISCHE PATENTANMELDUNG

(21) Anmeldenummer: **92113313.8**

(51) Int. Cl.[5]: **C08F 6/22**, C08F 6/24

(22) Anmeldetag: **05.08.92**

(30) Priorität: **20.08.91 DE 4127483**

(43) Veröffentlichungstag der Anmeldung:
**24.02.93 Patentblatt 93/08**

(84) Benannte Vertragsstaaten:
**BE DE FR GB NL**

(71) Anmelder: **BASF Aktiengesellschaft**
**Carl-Bosch-Strasse 38**
**W-6700 Ludwigshafen(DE)**

(72) Erfinder: **Niessner, Norbert, Dr.**
**Buhl'scher Hof 10**
**W-6701 Friedelsheim(DE)**
Erfinder: **Niessner, Manfred, Dr.**
**Gotenstrasse 25**
**W-6707 Schifferstadt(DE)**
Erfinder: **Guentherberg, Norbert, Dr.**
**Nachtigallenweg 44**
**W-6720 Speyer(DE)**
Erfinder: **Wickel, Stefan, Dr.**
**Giselherstrasse 71**
**W-6700 Ludwigshafen(DE)**

(54) **Schlagzäh modifizierende Polymere.**

(57) Schlagzäh modifizierende Polymere, erhältlich durch Fällung von Dispersionen von schlagzäh modifizierenden Polymeren mit ionisch modifizierten Homo- oder Copolymerisaten oder deren Mischungen als Fällungsmittel.

EP 0 528 267 A1

Die vorliegende Erfindung betrifft schlagzäh modifizierende Polymere, erhältlich durch Fällung von Dispersionen von schlagzäh modifizierenden Polymeren mit ionisch modifizierten Homo- oder Copolymerisaten oder deren Mischungen als Fällungsmittel.

Außerdem betrifft die Erfindung Verfahren zur Herstellung dieser schlagzäh modifizierenden Polymeren, deren Verwendung zur Herstellung von thermoplastischen Formmassen, die hierbei erhältlichen thermoplastischen Formmassen sowie deren Verwendung zur Herstellung von Fasern, Folien und Formkörpern und die hierbei erhältlichen Formkörper aus den thermoplastischen Formmassen.

Die Fällung von Latices mit anorganischen Salzen ist beispielsweise aus Houben-Weyl, Methoden der Organischen Chemie, Bd. XIV/1, S. 470f (1961) bekannt.

In der DE-A 34 05 940 wird die Fällung von Latices mit wasserlöslichen Polymeren unter gleichzeitigem Zusatz von niedermolekularen Elektrolyten als Fällungsmittel beschrieben.

Aus der CA-A 1 155 599 ist die Fällung von Latices mit Copolymeren, die ionische Gruppe tragen unter gleichzeitigem Zusatz von niedermolekularen Elektrolyten bekannt. Der Zusatz niedermolekularer Elektrolyte zur Fällung von Latices hat jedoch zur Folge, daß Reste der niedermolekularen Elektrolyte im gefällten Latex verbleiben und zu unerwünschten Effekten führen. So treten beispielsweise bei thermoplastischen Formmassen, die solche gefällten Latices mit Elektrolytresten enthalten, Salzkrusten und damit Oberflächendefekte auf. Den gleichen Nachteil zeigen thermoplastische Formmassen, bei deren Herstellung Polymerlatices verwendet werden, die mit anionisch modifizierten Polyacrylamiden unter gleichzeitigem Zusatz eines Salzes gefällt wurden, wie es in der japanischen Schrift 59084-922 beschrieben wird.

In der SU-A 1131883 und der FR-A 2 608 162 werden die Fällung von Latices mit natürlich vorkommenden Polymeren, wie Proteinen oder Stärke, beschrieben. Allerdings verläuft die Fällung nicht immer vollständig und außerdem neigen natürlich vorkommende Polymere wie Proteine oder Stärke bereits bei Temperaturen von 100 bis 150 °C zur Zersetzung, so daß sie in thermoplastischen Formmassen zu unerwünschten Vergilbungen führen.

Der Erfindung lag daher die Aufgabe zugrunde, schlagzäh modifizierende Polymere zur Verfügung zu stellen, die bei der Verwendung zur Herstellung von thermoplastischen Formmassen Produkte ergeben, die die genannten Nachteile nicht aufweisen.

Die Aufgabe wird erfindungsgemäß gelöst durch die eingangs definierten schlagzäh modifizierenden Polymeren. Bevorzugte Ausführungsformen sind den Unteransprüchen zu entnehmen. Außerdem wurden Verfahren zur Herstellung dieser schlagzäh modifizierenden Polymeren, deren Verwendung zur Herstellung von thermoplastischen Formmassen, die hierbei erhältlichen thermoplastischen Formmassen sowie deren Verwendung zur Herstellung von Fasern, Folien und Formkörpern und die hierbei erhältlichen Formkörper aus den thermoplastischen Formmassen gefunden.

Die zur Herstellung der erfindungsgemäßen schlagzäh modifizierenden Polymeren (auch Schlagzähmodifier, Elastomere oder Kautschuke genannt) eingesetzten Dispersionen von schlagzäh modifizierenden Polymeren enthalten als wesentliche Komponente ein Pfropfpolymerisat P), aufgebaut aus

$p_1$) 40 bis 80 Gew.-%, vorzugsweise 50 bis 70 Gew.-% einer Pfropfgrundlage aus einem kautschukelastischen Polymeren mit einer Glasübergangstemperatur von unter 0 °C

$p_2$) 20 bis 60 Gew.-% einer Pfropfauflage aus

$p_{21}$) 50 bis 95 Gew.-% Styrol oder substituierten Styrolen der allgemeinen Formel I

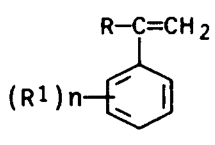

I

wobei R einen Alkylrest mit 1 bis 8 C-Atomen oder ein Wasserstoffatom und $R^1$ einen Alkylrest mit 1 bis 8 C-Atomen darstellen und n den Wert 0, 1, 2 oder 3 hat oder Methylmethacrylat oder deren Mischungen und

$p_{22}$) 5 bis 50 Gew.-% Acrylnitril, Methacrylnitril, Methylmethacrylat, Maleinsäureanhydrid oder deren Mischungen.

Für die Pfropfgrundlage $p_1$) kommen Polymerisate in Frage, deren Glasübergangstemperatur unterhalb von 0 °C, vorzugsweise unterhalb von -20 °C liegt. Dies sind z. B. Naturkautschuk, Synthesekautschuk auf der Basis von konjugierten Dienen, ggf. mit anderen Copolymeren sowie Elastomere auf der Basis von $C_1$- bis $C_8$-Alkylestern der Acrylsäure, die ggf. ebenfalls weitere Comonomere enthalten können.

Bevorzugt kommen als Pfropfgrundlage $p_1$) Polybutadien (vgl. DE-A 14 20 775 und DE-A 14 95 089) und Copolymerisate aus Polybutadien und Styrol (vgl. GB-A 649 166) in Betracht.

Weiterhin sind Pfropfgrundlagen $p_1$) bevorzugt, die aufgebaut sind aus

$p_{11}$) 70 bis 99,9 Gew.-%, vorzugsweise 99 Gew.-% mindestens eines Alkylacrylates mit 1 bis 8 C-Atomen im Alkylrest, vorzugsweise n-Butylacrylat und/oder 2-Ethyl-hexylacrylat, insbesondere n-Butylacrylat als alleiniges Alkylacrylat

$p_{12}$) 0 bis 30 Gew.-% eines weiteren copolymerisierbaren monoethylenisch ungesättigten Monomeren, wie Butadien, Isopren, Styrol, Acrylnitril, Methylmethacrylat und/oder Vinylmethylether

$p_{13}$) 0,1 bis 5 Gew.-%, vorzugsweise 1 bis 4 Gew.-% eines copolymerisierbaren, polyfunktionellen, vorzugsweise bi- oder trifunktionellen, die Vernetzung bewirkenden Monomeren.

Als solche bi- oder polyfunktionellen Vernetzungsmonomeren $p_{13}$) eignen sich Monomere, die vorzugsweise zwei, gegebenenfalls auch drei oder mehr, zur Copolymerisation befähigte ethylenische Doppelbindungen enthalten, die nicht in den 1,3-Stellungen konjugiert sind. Geeignete Vernetzungsmonomere sind beispielsweise Divinylbenzol, Diallylmaleat, Diallylfumarat, Diallylphthalat, Triallylcyanurat oder Triallylisocyanat. Als besonders günstiges Vernetzungsmonomeres hat sich der Acrylsäureester des Tricyclodecenylalkohols erwiesen (vgl. DE-A 12 60 135).

Auch diese Art von Pfropfgrundlagen ist an sich bekannt und in der Literatur beschrieben, beispielsweise in der DE-A 31 49 358.

Von den Pfropfauflagen $p_2$) sind diejenigen bevorzugt, in den $P_{21}$) Styrol oder α-Methylstyrol bedeutet. Als bevorzugte Monomeren-Gemische werden vor allem Styrol und Acrylnitril, α-Methylstyrol und Acrylnitril, Styrol, Acrylnitril und Methylmethacrylat, Styrol und Maleinsäureanhydrid eingesetzt. Die Pfropfauflagen sind erhältlich durch Copolymerisation der Komponenten $p_{21}$) und $P_{22}$).

Die Pfropfung kann auch mehrstufig erfolgen, indem zuerst ein Teil der die Pfropfhülle bildenden Monomere aufgepfropft wird und anschließend der Rest.

Der Aufbau der Pfropfauflage (Pfropfhülle) des Pfropfmischpolymerisats kann ein- oder zweistufig erfolgen.

Im Falle des einstufigen Aufbaues der Pfropfhülle wird ein Gemisch der Monomeren $p_{21}$) und $p_{22}$) in dem gewünschten Gew.-Verhältnis im Bereich von 95:5 bis 50:50, vorzugsweise von 90:10 bis 65:35 in Gegenwart des Elastomeren $p_1$ polymerisiert.

Im Falle eines zweistufigen Aufbaus der Pfropfhülle $p_2$) macht die 1. Stufe im allgemeinen 20 bis 70 Gew.-%, vorzugsweise 25 bis 50 Gew.-%, bezogen auf $p_2$), aus. Zu ihrer Herstellung werden vorzugsweise nur monoethylenisch-ungesättigte aromatische Kohlenwasserstoffe ($P_{21}$) verwendet.

Die 2. Stufe der Pfropfhülle macht im allgemeinen 30 bis 80 Gew.-%, insbesondere 50 bis 75 Gew.-%, jeweils bezogen auf $p_2$), aus. Zu ihrer Herstellung werden Mischungen aus den genannten monoethylenisch ungesättigten aromatischen Kohlenwasserstoffen $P_{21}$) und monoethylenisch ungesättigten Monomeren $p_{22}$) im Gewichtsverhältnis $p_{21}$)/$p_{22}$) von im allgemeinen 90:10 bis 60:40, insbesondere 80:20 bis 70:30 angewendet.

Die Herstellung der Pfropfpolymerisate P) erfolgt durch Dispersions-, vorzugsweise Emulsionspolymerisation in an sich bekannter Weise, wie in DE-A 12 60 135 beschrieben. Die Polymerisation kann durch radikalbildende Initiatoren wie Azoverbindungen oder Peroxide ausgelöst werden, gegebenenfalls in Anwesenheit eines Redoxsystems, beispielsweise $Fe^{2+}/Fe^{3+}$. Die Polymerisationstemperatur liegt i.a. im Bereich von 30 bis 100 °C. Die üblichen Hilfsstoffe wie Regler und Stabilisatoren können zugegen sein.

Weiterhin können übliche Emulgatoren für Latices, wobei unter Latices wäßrige Dispersionen von Kautschuken verstanden wird, eingesetzt werden. Es kann sich um anionische, kationische oder nichtionische Emulgatoren handeln, wie sie beispielsweise aus B. Vollmert, Grundriß der Makromolekularen Chemie, Band 1, S. 183ff bekannt sind. Die bevorzugt eingesetzten anionischen Emulgatoren umfassen z. B. die Alkalimetallsalze langkettiger Alkancarbonsäuren, beispielsweise Palmitinsäure, Stearinsäure und Ölsäure sowie Alkalimetallsalze von Sulfonsäuren mit 10 bis 16 C-Atomen, wie sie durch Sulfochlorierung der entsprechenden Paraffine erhältlich sind, aber auch Alkalimetallsalze von Halbestern der Phthalsäure mit $C_8$- bis $C_{18}$-Alkoholen.

Kationische Emulgatoren sind beispielsweise Salze langkettiger, insbesondere ungesättigter Amine mit 12 bis 18 C-Atomen oder quaternäre Ammoniumverbindungen mit längerkettigen Olefin- oder Paraffinresten.

Nichtionische Emulgatoren, die sich beispielsweise durch Reaktion von langkettigen Alkoholen oder alkylierten Phenolen mit Ethylenoxid herstellen lassen (Ethoxylierung), wie Polyethylenoxide oder Polypropylenoxide sind ebenfalls im Sinne der Erfindung geeignet. Weiterhin geeignet ist die Verwendung von Schutzkolloiden wie Gelatine, Polyvinylpyrrolidon, Polyvinylalkohol, sowie von Block- und Pfropfcopolymeren aus einem wasserlöslichen Polymeren und einem mit dem emulgierten Material verträglichen Polymeren.

Die als Pfropfgrundlage $p_1$) dienende Elastomerphase weist i .a. eine mittlere Teilchengröße von 50 bis 1000 nm auf ($d_{50}$-Wert der integralen Massenverteilung).

Die Bedingungen der Pfropfmischpolymerisation werden vorzugsweise so gewählt, daß Teilchengrößen von 50 bis 700 nm ($d_{50}$-Wert d. integralen Massenverteilung) resultieren. Maßnahmen hierzu sind bekannt und z. B. in der DE-OS 28 26 925 beschrieben.

Durch das Saatlatex-Verfahren kann direkt eine grobteilige Kautschukdispersion hergestellt werden.

Um möglichst zähe Produkte zu erzielen, ist es häufig von Vorteil, eine Mischung mindestens zweier Pfropfmischpolymerisate mit unterschiedlicher Teilchengröße zu verwenden.

Um dies zu erreichen, werden die Teilchen des Kautschuks in bekannter Weise, z. B. durch Agglomeration, vergrößert, so daß der Latex bimodal (50 bis 180 nm und 200 bis 700 nm) aufgebaut ist.

In einer bevorzugten Ausführungsform wird eine Mischung aus zwei Pfropfmischpolymerisaten mit Teilchendurchmessern ($d_{50}$-Wert der integralen Massenverteilung) von 50 bis 180 nm bzw. 200 bis 700 nm im Gewichtsverhältnis 70:30 bis 30:70 eingesetzt.

Der chemische Aufbau der beiden Pfropfmischpolymerisate ist vorzugsweise derselbe, obwohl die Hülle des grobteiligen Pfropfmischpolymerisates insbesondere auch zweistufig aufgebaut werden kann.

Um die erfindungsgemäßen schlagzäh modifizierenden Polymeren zu erhalten, werden die Dispersionen der schlagzäh modifizierenden Polymeren mit ionisch modifizierten Homo- oder Copolymerisaten oder deren Mischungen als Fällungsmittel gefällt.

Die Fällungsmittel werden in Mengen von 0,01 bis 5 Gew.-%, bevorzugt 0,02 bis 0,5 Gew.-%, bezogen auf den Feststoff in den Dispersionen eingesetzt.

Unter ionisch modifizierten Polymerisaten werden sowohl solche Polymeri-sate verstanden, die erst nach der Polymerisation ionisch modifiziert werden als auch solche, bei denen schon die zur Polymerisation eingesetzten Monomere - zu mindest teilweise - ionisch modifiziert sind. Auch verschieden ionisch modifizierte Monomere können eingesetzt werden.

Die als Fällungsmittel eingesetzten Homo- oder Copolymerisate können kationisch oder anionisch modifiziert sein, wobei die kationisch modifizierten Polymerisate bevorzugt sind.

Geeignete kationisch modifizierte Homo- oder Copolymerisate sind beispielsweise aufgebaut aus wasserlöslichen ethylenisch ungesättigten Monomeren der Di-$C_1$- bis $C_3$-Alkylamino-$C_2$- bis $C_6$-Alkyl(meth)-acrylate, wie Dimethylaminoethylacrylat, Dimethylaminoethylmethacrylat, Diethylaminoethylacrylat, Diethylaminoethylmethacrylat, Dimethylaminopropylacrylat, Dimethylaminobutylacrylat, Dimethylaminoneopentylacrylat und Dimethylaminoneopentylmethacrylat. Die basischen Acrylate können in Form der Salze mit anorganischen Säuren oder Carbonsäuren mit 1 bis 4 Kohlenstoffatomen oder auch in quaternisierter Form der Polymerisation unterworfen werden. Geeignet sind auch olefinisch ungesättigte Nitrile, wie Acrylnitril.

Außerdem eignen sich wasserlösliche Diallylammoniumverbindungen der allgemeinen Formeln

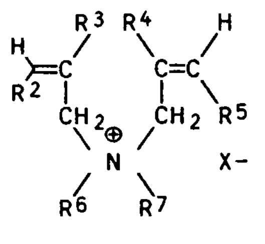 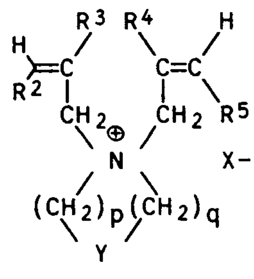

in der $X^-$ für ein Halogenidion, wie Chlorid-, Fluorid-, Bromid- und Iodid- oder ein Hydroxid-, Nitrat-, Methosulfat-, Hydrogensulfat- oder Dihydrogenphosphation steht, p und q ganze Zahlen von 1 bis 2, vorzugsweise p = q = 2 bedeuten,

Y für > N-Methyl, > N-Ethyl, vorzugsweise für ein Sauerstoffatom oder eine > $CH_2$-Gruppe steht, und $R^2$, $R^3$, $R^4$ und $R^5$ jeweils ein Wasserstoff oder einen Alkylrest mit 1 bis 6 Kohlenstoffatomen und $R^6$ und $R^7$ H oder einen Alkylrest, der geradkettig oder verzweigtkettig sein kann, mit 1 bis 18 Kohlenstoffatomen, vorzugsweise 1 bis 6 Kohlenstoffatomen oder einen Aryl- und/oder Benzylrest bedeuten.

Derartige diolefinisch ungesättigte Monomere sind z. B. Dimethyldiallylammoniumchlorid, Dimethyldiallylammoniumbromid, Diethyldiallylammoniumchlorid, Methyl-tert.-butyldiallylammoniummethosulfat, Methyl-n-propyldiallylammoniumchlorid, Dimethyldiallylammoniumhydrogensulfat, Dimethyldiallylammoniumdihydrogenphosphat, Di-n-butyl-diallylammoniumbromid, Diallylpiperidiniumbromid, Diallylpyrrolidiniumchlorid und Diallylmorpholiniumbromid.

Außerdem kommen als wasserlösliche Monomere N-Vinylimidazolium-Verbindungen in Betracht, die beispielsweise mit Hilfe folgender Formel charakterisiert werden können:

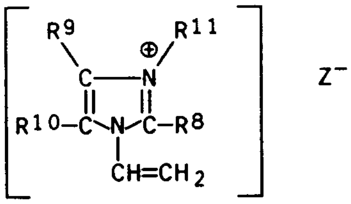

in der $R^8$, $R^9$ und $R^{10}$ = H, $CH_3$ und $R^8$ außerdem noch $C_2H_5$, $C_3H_7$ und $C_4H_9$ und $R^{11}$ = H, $C_1$- bis $C_6$-Alkyl-, Benzyl- und

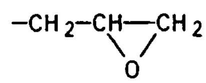

und $Z^-$ ein Anion, wie $Cl^-$, Br, $J^-$, Methosulfat, Ethosulfat, Acetatsulfat, Hydrogensulfat und Dihydrogenphosphat, Hydrogensulfat und Dihydrogenphosphat sein kann. Vorzugsweise verwendet man aus dieser Verbindungsklasse das unsubstituierte N-Vinylimidazol in Salzform. Weitere geeignete wasserlösliche Monomere sind N-Vinylimidazoline, die beispielsweise mit Hilfe folgender allgemeinen Formel charakterisiert werden können:

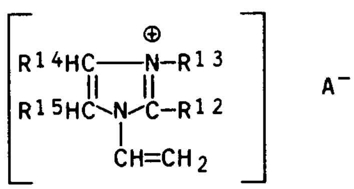

II

in der
$R^{12}$ = H, $C_1$- bis $C_{18}$-Alkyl,

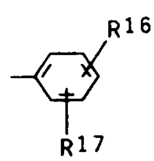

$R^{16}$, $R^{17}$ = H, $C_1$- bis $C_4$-Alkyl, Cl,
$R^{13}$, = H, $C_1$- bis $C_{18}$-Alkyl,

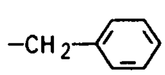 , 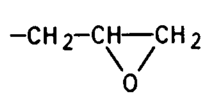

$R^{14}$, $R^{15}$ = H, $C_1$- bis $C_4$-Alkyl, und
$A^-$ ein Säurerest bedeutet.

Vorzugsweise setzt man bei der Polymerisation aus dieser Gruppe von Verbindungen 1-Vinyl-2-imidazolin-Salze der Formel III ein

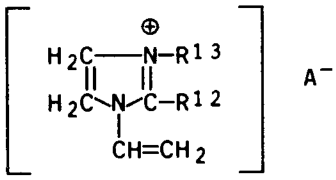 III

in der
$R^{12}$ = H, $CH_3$, $C_2H_5$, n- und i-$C_3H_7$, $C_6H_5$ und
$A^-$ ein Säurerest ist. $A^-$ steht vorzugsweise für $Cl^-$, $Br^-$, $SO_4^{2-}$, $HSO_4^{\ominus}$, $H_2PO_4^{\ominus}$, $CH_3O\text{-}SO_3^-$, $C_2H_5\text{-}O\text{-}SO_3^-$, $R^{12}\text{-}COO^-$ und
$R^{13}$ = H, $C_1$- bis $C_4$-Alkyl und Aryl.

Der Substituent $A^-$ in den Formeln II und III kann prinzipiell jeder beliebige Säurerest einer anorganischen oder einer organischen Säure sein. Die Monomeren der Formel II werden erhalten, indem man die freie Base, d. h. 1-Vinyl-2-imidazoline, mit der äquivalenten Menge einer Säure neutralisiert. Die Vinylimidazoline können auch beispielsweise mit Trichloressigsäure, Benzolsulfonsäure oder Toluolsulfonsäure neutralisiert werden. Außer Salzen von 1-Vinyl-2-imidazolinen kommen auch quaternisierte 1-Vinyl-2-imidazoline in Betracht. Sie werden hergestellt, indem man 1-Vinyl-2-imidazoline, die gegebenenfalls in 2-, 4- und 5-Stellung substituiert sein können, mit bekannten Quaternisierungsmitteln umsetzt. Als Quaternisierungsmittel kommen beispielsweise $C_1$- bis $C_{18}$-Alkylchloride oder -bromide, Benzylchlorid, Benzylbromid, Epichlorhydrin, Dimethylsulfat und Diethylsulfat in Betracht. Als Quaternisierungsmittel verwendet man vorzugsweise Epichlorhydrin, Benzylchlorid, Dimethylsulfat und Methylchlorid.

Bevorzugte ethylenisch ungesättigte Monomere für den Aufbau von kationisch modifizierten Homopolymerisaten sind Diallyldimethylammoniumchlorid, Acrylsäure, Methacrylsäure und Trimethylammoniumethylacrylat, insbesondere Diallyldimethylammoniumchlorid.

Bei den kationisch modifizierten Copolymerisaten sind Copolymere von Acryl- oder Methacrylamiden bevorzugt, insbesondere mit Diallyldimethylammoniumchlorid, Acrylsäure, Methacrylsäure und Dimethylaminoethylacrylat.

Von besonderem Interesse sind beispielsweise Copolymerisate aus Acrylamid und Acrylsäure, Copolymerisate aus Acrylamid und Methacrylsäure, Copolymerisate aus Methacrylamid und Acrylsäure, Copolymerisate aus Methacrylamid und Methacrylsäure, Copolymerisate aus Acrylamid, Acrylsäure und Acrylamido-2-methylpropansulfonsäure, Copolymerisate aus Acrylamid und Dimethylaminoethylacrylat und Copolymerisate aus Acrylamid und Diethylaminoethylmethacrylat und Copolymerisate aus Methacrylamid und Dimethylaminoethylacrylat, insbesondere Copolymerisate aus Acrylamid und Dimethylaminoethylacrylat.

Die Carbonsäuren und anderen ethylenisch ungesättigten Säuren, wie Vinylsulfonsäure und Acrylamidopropansulfonsäure, können entweder in Form der freien Säure, in partiell neutralisierter oder auch in vollständig neutralisierter Form bei der Polymerisation eingesetzt werden. Als Basen zur Neutralisation dieser Monomeren verwendet man beispielsweise Natronlauge, Kalilauge, Ammoniak, Amine, wie Butylamin, Triethylamin, Morpholin und Ethanolamin.

Die basischen Acrylate und Methacrylate werden vorzugsweise als Salz oder in quaternisierter Form bei der Homo- oder Copolymerisation eingesetzt. Die Neutralisation der basischen Acrylate und -methacrylate erfolgt beispielsweise mit Hilfe von Salzsäure, Bromwasserstoffsäure, Schwefelsäure, Phosphorsäure und Carbonsäuren, wie Ameisensäure, Essigsäure und Propionsäure. Außerdem werden die basischen Acrylate und -methacrylate in quaternisierter Form eingesetzt. Die Quaternisierungsprodukte werden erhalten, indem man diese Verbindungen mit üblichen Quaternisierungsmitteln, wie Methylchlorid, Ethylchlorid, Benzylchlorid, Laurylchlorid, Dimethylsulfat, Diethylsulfat oder Epichlorhydrin quaternisiert.

Weitere geeignete Monomere zum Aufbau von kationisch modifizierten Homo- oder Copolymerisaten sind N-Vinylamide und N-Vinyllactame wie N-Vinylformamid, N-Vinylacetamid, N-Vinylpyrrolidon und N-Vinylcaprolactam. Sie können im Anschluß an die Polymerisation zu Aminen hydrolysiert und durch Protonierung oder Quaternisierung zu Ammoniumgruppen umgesetzt werden.

Geeignete anionisch modifizierte Homo- oder Copolymerisate sind beispielsweise aufgebaut aus ethylenisch ungesättigten $C_3$- bis $C_6$-Carbonsäuren wie Acrylsäure, Methacrylsäure, Itakonsäure, Maleinsäure, Fumarsäure und Ethacrylsäure sowie aus Acrylamidomethylpropansulfonsäure, Vinylsulfonsäure, Vinylphosphonsäure und Vinylmilchsäure. Bei den anionisch modifizierten Copolymerisaten handelt es sich vorzugsweise um Polymere dieser Verbindungen mit Methacrylamid oder Acrylamid.

Bei den ionisch modifizierten Copolymeren von (Meth)Acrylamiden beträgt der Anteil an (Meth)-Acrylamid mindestens 50 mol.-%.

Weitere Merkmale zur Herstellung der ionisch modifizierten Homo- oder Copolymerisate sind dem Fachmann bekannt und z. B. in H. Horaçek, Seifen-Öle-Fette-Wachse 114, 1988, S. 447 bis 455 und in H. Burkert, J. Hartmann; Ullmann's Encyclopedia of Industrial Chemistry, Vol. A 11, VCH Verlagsgesellschaft, Weinheim, 1988, S. 251-261 beschrieben.

Zur Fällung von Dispersionen von schlagzäh modifizierenden Polymeren können die ionisch modifizierten Homo- oder Copolymerisate alleine oder in Mischungen eingesetzt werden. Es sind sowohl Mischungen verschiedener Homopolymerisate als auch Mischungen verschiedener Copolymerisate geeignet, sowie Mischungen aus Homo- und Copolymerisaten. Bevorzugt werden jedoch kationisch modifizierte Homo- oder Copolymerisate eingesetzt.

Die Fällung von Dispersionen von schlagzäh modifizierenden Polymeren kann dadurch erfolgen, daß die als Fällungsmittel eingesetzten ionisch modifizierten Homo- oder Copolymerisate oder deren Mischungen, die in einem Lösungsmittel oder Lösungsmittelgemisch vorliegen, zu den in gleichartigen Lösungsmitteln vorliegenden Dispersionen von schlagzäh modifizierenden Polymeren zugegeben werden. Ebenfalls möglich ist die Zugabe der Dispersionen von schlagzäh modifizierten Homo- oder Copolymerisaten zu den als Fällungsmittel eingesetzten ionisch modifizierten Homo- oder Copolymerisaten. In jedem Fall arbeitet man in Lösung, wobei als Lösungsmittel insbesondere Wasser geeignet ist.

Vorzugsweise setzt man keine niedermolekularen Elektrolyte, d. h. Elektrolyte mit mittleren Molekulargewichten $M_n$ (Zahlenmittel) von 26 bis 500 g/mol, zu.

Die Fällung erfolgt im Fall von wäßrigen Dispersionen i.a. bei Temperaturen von -10 bis +100 °C, in allen anderen Fällen bei Temperaturen, die zwischen dem Gefrierpunkt und dem Siedepunkt des Dispergens und/oder des Lösungsmittels des Fällungsmittels liegen.

Die Bedingungen, unter denen Dispersionen, insbesondere Latices, ausgefällt werden, sind z. B. in Houben-Weyl, Methoden der Organischen Chemie, Bd. XIV, 1, S. 470ff (1961), beschrieben. Nur beispielhaft seien hier die Fällung unter Rühren oder Scheren, mit Hilfe von Ultraschall, mit Hilfe von Heißdampf oder das sogenannte "Ausfrieren" bzw. das Fällen durch Temperaturerhöhung genannt, wie auch in M.J. Schick, Nonionic Surfactants: Physical Chemistry, Surfactant Science Series Vol. 23, Marcel Dekkers, N.Y., Basel (1987) beschrieben.

Die erfindungsgemäßen schlagzäh modifizierenden Polymere eignen sich besonders zur Herstellung von thermoplastischen Formmassen, enthaltend als wesentliche Komponenten

A) 5 bis 95 Gew.-%, bevorzugt 5 bis 80 Gew.-%, insbesondere 10 bis 50 Gew.-% mindestens eines erfindungsgemäßen schlagzäh modifizierenden Polymeren

B) 5 bis 95 Gew.-%, bevorzugt 5 bis 80 Gew.-%, insbesondere 10 bis 50 Gew.-% mindestens eines thermoplastischen Copolymerisats, aufgebaut aus

- $b_1$) 50 bis 95 Gew.-%, vorzugsweise 60 bis 80 Gew.-% Styrol oder substituierten Styrolen der allgemeinen Formel I oder Methylmethacrylat oder deren Mischungen
- $b_2$) 5 bis 50 Gew.-%, vorzugsweise 20 bis 40 Gew.-% Acrylnitril, Methacrylnitril, Methylmethacrylat, Maleinsäureanhydrid oder deren Mischungen

C) 0 bis 90 Gew.-%, bevorzugt 0 bis 80 Gew.-%, insbesondere 0 bis 65 Gew.-% mindestens eines Polycarbonats

D) 0 bis 90 Gew.-%, bevorzugt 0 bis 50 Gew.-%, insbesondere 0 bis 20 Gew.-% faser- oder teilchenförmige Füllstoffe oder deren Mischungen.

Die Copolymerisate B) sind harzartig, thermoplastisch und kautschukfrei. Besonders bevorzugte Copolymerisate B) sind solche aus Styrol mit Acrylnitril und gegebenenfalls mit Methylmethacrylat, aus $\alpha$-Methylstyrol mit Acrylnitril und gegebenenfalls mit Methylmethacrylat oder aus Styrol und $\alpha$-Methylstyrol mit Acrylnitril und gegebenenfalls mit Methylmethacrylat und aus Styrol und Maleinsäureanhydrid. Es können auch mehrere der beschriebenen Copolymere gleichzeitig eingesetzt werden.

Solche Copolymerisate entstehen häufig bei der Pfropfpolymerisation zur Herstellung der Komponente P) als Nebenprodukte, besonders dann, wenn große Mengen Monomere auf kleine Mengen Kautschuk gepfropft werden.

Die Copolymerisate B) sind an sich bekannt und lassen sich durch radikalische Polymerisation, insbesondere durch Emulsions-, Suspensions-, Lösungs- und Massepolymerisation herstellen. Sie weisen Viskositätszahlen im Bereich von 40 bis 160 auf, dies entspricht mittleren Molekulargewichten $\overline{M}_w$ - (Gewichtsmittelwert) von 40 000 bis 2 000 000.

Als Komponente C) können die thermoplastischen Formmassen mindestens ein Polycarbonat enthalten.

Geeignete Polycarbonate sind beispielsweise solche auf Basis von Diphenolen der allgemeinen Formel IV

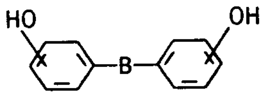

IV

worin B eine Einfachbindung, eine $C_1$- bis $C_3$-Alkylen-, eine $C_2$- bis $C_3$-Alkyliden-, eine $C_3$- bis $C_6$-Cycloalkylidengruppe, sowie -S- oder -$SO_2$- bedeutet.

Bevorzugte Diphenole der Formel IV sind beispielsweise 4,4'-Dihydroxybiphenyl, 2,2-Bis-(4-hydroxyphenyl)-propan, 2,4-Bis-(4-hydroxyphenyl)-2-methylbutan, 1, 1-Bis-(4-hydroxyphenyl)-cyclohexan. Besonders bevorzugt sind 2,2-Bis-(4-hydroxyphenyl)-propan und 1, 1-Bis-(4-hydroxyphenyl)-cyclohexan.

Sowohl Homopolycarbonate als auch Copolycarbonate sind als Komponente C) geeignet, bevorzugt sind neben dem Bisphenol A-Homopolymerisat die Copolycarbonate von Bisphenol A.

Die geeigneten Polycarbonate können in bekannter Weise verzweigt sein, und zwar vorzugsweise durch den Einbau von 0,05 bis 2,0 mol-%, bezogen auf die Summe der eingesetzten Diphenole, an mindestens trifunktionellen Verbindungen, beispielsweise solchen mit drei oder mehr als drei phenolischen OH-Gruppen.

Als besonders geeignet haben sich Polycarbonate erwiesen, die relative Viskositäten $\eta_{rel}$ von 1,10 bis 1,50, insbesondere von 1,25 bis 1,40 aufweisen. Dies entspricht mittleren Molekulargewichten Mw (Gewichtsmittelwert) von 10 000 bis 200 000, vorzugsweise von 20 000 bis 80 000.

Die Diphenole der allgemeinen Formel IV sind an sich bekannt oder nach bekannten Verfahren herstellbar.

Die Herstellung der Polycarbonate kann beispielsweise durch Umsetzung der Diphenole mit Phosgen nach dem Phasengrenzflächenverfahren oder mit Phosgen nach dem Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird. (Bezüglich polydiorganosiloxanhaltigen Polycarbonaten siehe beispielsweise DE-OS 33 34 782.)

Geeignete Kettenabbrecher sind beispielsweise Phenol, p-tert.-Butylphenol aber auch langkettige Alkylphenole wie 4-(1,3-Tetramethyl-butyl)-phenol, gemäß DE-OS 28 42 005 oder Monoalkylphenole oder Dialkylphenole mit insgesamt 8 bis 20 C-Atomen in den Alkylsubstituenten gemäß DE-A 35 06 472, wie beispielsweise p-Nonylphenol, 3,5-di-tert.-Butylphenol, p-tert.-Octylphenol, p-Dodecylphenol, 2-(3,5-dimethyl-heptyl)-phenol und 4-(3,5-Dimethylheptyl)-phenol.

Weitere geeignete Polycarbonate sind solche auf Basis von Hydrochinon oder Resorcin.

Als Komponente D) können die thermoplastischen Formmassen faser- oder teilchenförmige Füllstoffe oder deren Mischungen enthalten. Dies sind beispielsweise Farbstoffe, Pigmente, Antistatika, UV-Stabilisatoren oder Wärmestabilisatoren, Verstärkungsmittel wie Glas- oder Kohlenstoffasern, Antioxidantien, auch Flammschutzmittel und deren Synergisten sowie insbesondere Schmier- und Entformungshilfsmittel. Ebenfalls können andere für die genannten Copolymerisate, Pfropfpolymerisate und Polycarbonate übliche Zusatzstoffe enthalten sein.

Die Herstellung der thermoplastischen Formmassen erfolgt durch Mischen der Komponenten. Es kann vorteilhaft sein, einzelne Komponenten vorzumischen. Auch das Mischen der Komponenten in Lösung und Entfernen der Lösungsmittel ist möglich.

Das Mischen der z.B. trockenen Komponenten kann nach allen bekannten Methoden erfolgen. Vorzugsweise geschieht jedoch das Mischen der Komponenten bei Temperaturen von 200 bis 320°C durch gemeinsames Extrudieren, Kneten oder Verwalzen der Komponenten, wobei die Komponenten notwendigenfalls zuvor aus der bei der Polymerisation erhaltenen Lösung oder aus der wäßrigen Dispersion isoliert worden sind.

Die thermoplastischen Formmassen zeichnen sich durch gute Kerbschlagzähigkeit und Wärmeformbeständigkeit aus sowie durch keinerlei Oberflächendefekte wie Salzkrusten und zudem durch eine helle Eigenfarbe.

Die erfindungsgemäßen schlagzäh modifizierenden Polymeren weisen einen geringen Gehalt an Fällungsmittel auf und einen pH-Wert, der etwa im neutralen Bereich liegt, so daß Korrosionserscheinungen beim Verarbeiten der schlagzäh modifizierenden Polymeren mit den schlagzäh zu modifizierenden thermoplastischen Formmassen nicht auftreten.

Beispiele 1 bis 10

Herstellung der schlagzäh modifizierenden Polymeren

Die mittlere Teilchengröße und die Teilchengrößenverteilung wurden aus der integralen Massenverteilung bestimmt. Bei den mittleren Teilchengrößen handelt es sich in allen Fällen um das Gewichtsmittel der Teilchengrößen, wie sie mittels einer analytischen Ultrazentrifuge entsprechend der Methode von W. Scholtan und H. Lange, Kolloid-Z, und Z.-Polymere 250 (1972), Seiten 782 bis 796, bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als $d_{50}$-Wert der integralen Massenverteilung bezeichnet wird, ist dabei als der Teilchendurchmesser definiert, bei dem 50 Gew.-% der Teilchen einen kleineren Durchmesser haben als der Durchmesser, der dem $d_{50}$-Wert entspricht. Ebenso haben dann 50 Gew.-% der Teilchen einen größeren Durchmesser als der $d_{50}$-Wert. Zur Charakterisierung der Breite der Teilchengrößenverteilung der Kautschukteilchen werden neben dem $d_{50}$-Wert (mittlerer Teilchendurchmesser) die sich aus der integralen Massenverteilung ergebenden $d_{10}$- und $d_{90}$-Werte herangezogen. Der $d_{10}$- bzw. $d_{90}$-Wert der integralen Massenverteilung ist dabei entsprechend dem $d_{50}$-Wert definiert mit dem Unterschied, daß sie auf 10 bzw. 90 GeN.-% der Teilchen bezogen sind. Der Quotient

$$\frac{d_{90} - d_{10}}{d_{50}} = Q$$

stellt ein Maß für die Verteilungsbreite der Teilchengröße dar.

Es wurden folgende Komponenten eingesetzt:

P1) Ein feinteiliges Pfropfmischpolymerisat, hergestellt aus

ß1) 16 g Butylacrylat und 0,4 g Tricyclodecenylacrylat, die in 150 g Wasser unter Zusatz von 1 g des Natriumsalzes einer $C_{12}$-$C_{18}$-Paraffinsulfonsäure, 0,3 g Kaliumpersulfat, 0,3 g Natriumhydrogencarbonat und 0,15 g Natriumpyrophosphat unter Rühren auf 60 °C erwärmt wurden. 10 Minuten nach dem Anspringen der Polymerisationsreaktion wurden innerhalb von 3 Stunden eine Mischung aus 82 g Butylacrylat und 1,6 g Tricyclodecenylacrylat zugegeben. Nach Beendigung der Monomerzugabe wurde noch eine Stunde gerührt. Der erhaltene Latex des vernetzten Butylacrylat-Polymerisats hatte einen Feststoffgehalt von 40 Gew.-%, die mittlere Teilchengröße (Gewichtsmittel) wurde zu 76 nm ermittelt und die Teilchengrößenverteilung war eng (Quotient Q = 0,29).

ß2) 150 g des nach ß1) erhaltenen Polybutylacrylat-Latex wurden mit 40 g einer Mischung aus Styrol und Acrylnitril (Gewichtsverhältnis 75:25) und 60 g Wasser gemischt und unter Rühren nach Zusatz von weiteren 0,03 g Kaliumpersulfat und 0,05 g Lauroylperoxid 4 Stunden auf 65 °C erhitzt.

P2) Ein grobteiliges Pfropfmischpolymerisat, das folgendermaßen hergestellt wurde:

ß3) Zu einer Vorlage aus 1,5 g des nach ß1) hergestellten Latex wurden nach Zugabe von 50 g Wasser und 0,1 g Kaliumpersulfat im Verlauf von 3 Stunden einerseits eine Mischung aus 49 g Butylacrylat und 1 g Tricyclodecenylacrylat und andererseits eine Lösung von 0,5 g des Natriumsalzes einer $C_{12}$-$C_{18}$-Paraffinsulfonsäure in 25 g Wasser bei 60 °C zugegeben. Anschließend wurde 2 Stunden nachpolymerisiert. Der erhaltene Latex des vernetzten Butylacrylat-Polymerisats hatte einen Feststoffgehalt von 40 %. Die mittlere Teilchengröße (Gewichtsmittel des Latex) wurde zu 430 nm ermittelt, die Teilchengrößenverteilung war eng (Q = 0,1).

ß4) 150 g des nach ß3) hergestellten Latex wurden mit 20 g Styrol und 60 g Wasser gemischt und unter Rühren nach Zusatz von weiteren 0,03 g Kaliumpersulfat und 0,05 g Lauroylperoxid 3 Stunden auf 65 °C erhitzt. Die bei dieser Pfropfmischpolymerisation erhaltene Dispersion wurde dann mit 20 g eines Gemisches aus Styrol und Acrylnitril im Gewichtsverhältnis 75:25 weitere 4 Stunden polymerisiert.

Als Fällungsmittel wurden verwendet:

F1) Ein kationisch modifiziertes Homopolymerisat von Diallyldimethylammoniumchlorid mit einem mittleren Molekulargewicht $M_n$ (Zahlenmittel) von 500.000 (bestimmt über Gelchromatographie), hergestellt in Anlehnung an das in der EP-A 290 753 beschriebene Verfahren.

F2) Ein kationisch modifiziertes Copolymerisat aus 75 Gew.-% Acrylamid und 25 Gew.-% 2-(N,N,N,-Trimethylammonium)ethylacrylatmethosulfat mit einer Standard-Viskosität von 3,7 bis 4,7 mPas und einem Feststoffgehalt von 35 %, hergestellt nach einem Verfahren, wie es beispielsweise in der US-A 3

284 393 beschrieben ist.

F3) bis F6)

Kationisch modifizierte Copolymerisate aus Acrylamid (AM) und 2-(N,N,N-Trimethylammonium)-ethylacrylatchlorid ($DMA_3 \cdot CH_3Cl$). Die Zusammensetzungen und Eigenschaften der Fällungsmittel F3) bis F6) sind in Tabelle 1 zusammengestellt.

Tabelle 1

| Fällungs-mittel | Zusammensetzung [Gew.-%] | | Standardviskosität [mPas] | Feststoffgehalt [%] |
|---|---|---|---|---|
| | AM | $DMA_3 \cdot CH_3Cl$ | | |
| F3 | 75 | 25 | 2,4 | 100 |
| F4 | 75 | 25 | 3,0 | 100 |
| F5 | 65 | 35 | 2,9 | 100 |
| F6 | 55 | 45 | 2,3 | 100 |

Die Standard-Viskositäten wurden folgendermaßen bestimmt: Eine 0,1 gew.-%ige Lösung aus 0,3 g Festprodukt in 300 ml bi-destilliertem Wasser wurde 1 Stunde bei 25°C auf einen Magnetrührer in 600 U/min gerührt, dann mit 17,5 g NaCl versetzt und anschließend durch ein Sieb mit einer Maschenweite von 0,1 mm gesiebt. Die Bestimmung der Viskosität erfolgte dann mittels eines Brookfield-Viskosimeters.

Die Fällung der Dispersionen der schlagzäh modifizierenden Polymeren P1) und P2) mit den Fällungsmitteln F1) bis F6) erfolgte so, daß jeweils 2 Volumenteile einer wäßrigen Lösung der Fällungsmittel F1) bis F6) mit 1 Volumenteil der Latices P1) und P2), die jeweils einen Feststoffgehalt von 40 % aufwiesen, gemischt wurden.

Fällmethode a: Es wurde bei 23°C gefällt.

Fällmethode b: Es wurde bei 23°C gefällt und anschließend auf 80°C erwärmt.

Vergleichsbeispiele V1 bis V10

Es wurde wie in den Beispielen 1 bis 10 gearbeitet, jedoch wurde als Fällungsmittel $MgSO_4$ eingesetzt.

Die Zusammensetzungen und Eigenschaften der so hergestellten schlagzäh modifizierenden Polymeren A) sind in Tabelle 2 zusammengestellt.

Der pH-Wert wurde nach der Fällung an den jeweiligen wäßrigen klaren oder trüben Phasen, die sich oberhalb des koagulierten Niederschlags der gefällten Latices befanden, bestimmt.

Tabelle 2

| Beispiel | Komponente P | Konzentration [g/100 ml $H_2O$] F1 | F2 | F3 | F4 | F5 | F6 | $MgSO_4$ | Fällmethode | Fällung | pH-Wert | Komponente A |
|---|---|---|---|---|---|---|---|---|---|---|---|---|
| 1 | P1 | 0,4 | | | | | | | b | klar | 7,9 | |
| 2 | P2 | 0,1 | | | | | | | a | klar | 8,0 | A1 |
| 3 | P2 | | 0,1 | | | | | | b | klar | 8,1 | A2 |
| 4 | P2 | | | 0,1 | | | | | b | klar | 7,4 | A3 |
| 5 | P2 | | | 0,2 | | | | | a | klar | 6,8 | |
| 6 | P2 | | | | 0,1 | | | | b | klar | 7,0 | A4 |
| 7 | P2 | | | | 0,2 | | | | a | klar | 6,8 | |
| 8 | P1 | | | | | 0,2 | | | b | klar | 7,4 | |
| 9 | P2 | | | | | 0,1 | | | b | klar | 7,2 | A5 |
| 10 | P2 | | | | | | 0,1 | | b | klar | 7,3 | A6 |
| V1 | P1 | | | | | | | 0,2 | a | trübe | 8,3 | |
| V2 | P1 | | | | | | | 0,2 | b | trübe | 8,3 | |
| V3 | P1 | | | | | | | 0,4 | b | trübe | 8,5 | |
| V4 | P1 | | | | | | | 0,7 | b | klar | 8,5 | |
| V5 | P1 | | | | | | | 0,75 | b | klar | 8,4 | |
| V6 | P2 | | | | | | | 0,1 | a | trübe | 8,5 | |
| V7 | P2 | | | | | | | 0,1 | b | trübe | 8,3 | |
| V8 | P2 | | | | | | | 0,2 | a | trübe | 8,3 | |
| V9 | P2 | | | | | | | 0,7 | a | klar | 8,5 | A7 |
| V10 | P2 | | | | | | | 0,75 | a | klar | 8,3 | |

Beispiele 11 bis 16

Herstellung der thermoplastischen Formmassen

Komponente B)

Ein Copolymerisat aus Styrol und Acrylnitril im Gew.-Verhältnis 80:20 mit einer Viskositätszahl von 83 ml/g (gemessen an einer 0,5 gew.-%igen Lösung in Dimethylformamid bei 23 ° C), hergestellt durch kontinuierliche Lösungspolymerisation nach einem Verfahren wie es beispielsweise im Kunststoff-Handbuch, Vieweg-Daumiller, Band V (Polystyrol), Carl-Hanser-Verlag, München 1969, Seite 124, Zeilen 12ff, beschrieben ist.

Jeweils 50 Gew.-% der Komponenten A) wurden mit 50 Gew.-% der Komponente B) in trockener Form auf einem Fluidmischer gemischt und bei 260 ° C auf einem Doppelschneckenextruder (ZSK 30 der Fa. Werner & Pfleiderer) extrudiert. Hieraus wurden die erforderlichen Testkörper durch Spritzguß bei 250 ° C hergestellt.

Vergleichsbeispiel V11

Es wurde wie in den Beispielen 11 bis 16 gearbeitet.

Die Kerbschlagzähigkeit $a_k$ [kJ/m$^2$] wurde nach DIN 53 453 an Stäben der Abmessungen 50 mm x 6 mm x 4 mm bei 23 ° C bestimmt, wobei die Stäbe mit einer rechteckigen Kerbe von 1,3 mm Tiefe und 2 mm Breite versehen waren.

Die Bestimmung der Wärmeformbeständigkeit erfolgte durch die Vicat-Erweichungstemperaturen nach der Methode B/50 (DIN 53 460) an Stäben der Abmessungen 50 mm x 6 mm x 4 mm.

Der Salzgehalt wurde über den Anteil an Metallkationen durch Atom-Absorptions-Spektroskopie bestimmt.

Die Zusammensetzungen und Eigenschaften sind in Tabelle 3 zusammengestellt.

Tabelle 3

| Beispiel | Komponente A | $a_k$ [kJ/m$^2$] | Vicat B/50 [ ° C] | Salzgehalt [%] |
|---|---|---|---|---|
| 11 | A1 | 20 | 103 | <0,001 |
| 12 | A2 | 19,5 | 104 | <0,001 |
| 13 | A3 | 19,9 | 103 | <0,001 |
| 14 | A4 | 21,1 | 103 | <0,001 |
| 15 | A5 | 22,0 | 103 | <0,001 |
| 16 | A6 | 22,4 | 102 | <0,001 |
| V11 | A7 | 19 | 100 | 0,005 |

## Patentansprüche

1. Schlagzäh modifizierende Polymere, erhältlich durch Fällung von Dispersionen von schlagzäh modifizierenden Polymeren mit ionisch modifizierten Homo- oder Copolymerisaten oder deren Mischungen als Fällungsmittel.

2. Schlagzäh modifizierende Polymere nach Anspruch 1, dadurch gekennzeichnet, daß als Fällungsmittel kationisch modifizierte Homo- oder Copolymerisate oder deren Mischungen als Fällungsmittel eingesetzt werden.

3. Schlagzäh modifizierende Polymere nach den Ansprüchen 1 bis 2, dadurch gekennzeichnet, daß als Fällungsmittel kationisch modifizierte Homopolymere von Diallyldimethylammoniumchlorid eingesetzt werden.

4. Schlagzäh modifizierende Polymere nach den Ansprüchen 1 bis 2, dadurch gekennzeichnet, daß als Fällungsmittel kationisch modifizierte Copolymere von (Meth)Acrylamiden eingesetzt werden.

**5.** Schlagzäh modifizierende Polymere nach den Ansprüchen 1 bis 4, dadurch gekennzeichnet, daß die Dispersionen von schlagzäh modifizierenden Polymeren als wesentliche Komponente ein Pfropfpolymerisat P) enthalten, aufgebaut aus

$p_1$) 40 bis 80 Gew.-% einer Pfropfgrundlage aus einem kautschukelastischen Polymeren mit einer Glasübergangstemperatur von unter 0 ° C

$P_2$) 20 bis 60 Gew.-% einer Pfropfauflage aus

$P_{21}$) 50 bis 95 Gew.-% Styrol oder substituierten Styrolen der allgemeinen Formel I

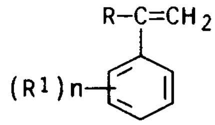

I

wobei R einen Alkylrest mit 1 bis 8 C-Atomen oder ein Wasserstoffatom und $R^1$ einen Alkylrest mit 1 bis 8 C-Atomen darstellen und n den Wert 0, 1, 2 oder 3 hat oder Methylmethacrylat oder deren Mischungen und

$P_{22}$) 5 bis 50 Gew.-% Acrylnitril, Methacrylnitril, Methylmethacrylat, Maleinsäureanhydrid oder deren Mischungen.

**6.** Verfahren zur Herstellung von schlagzäh modifizierenden Polymeren gemäß den Ansprüchen 1 bis 5, wobei Dispersionen von schlagzäh modifizierenden Polymeren mit Fällungsmitteln gefällt werden, dadurch gekennzeichnet, daß man als Fällungsmittel ionisch modifizierte Homo- oder Copolymerisate oder deren Mischungen verwendet.

**7.** Verwendung von schlagzäh modifizierenden Polymeren gemäß den Ansprüchen 1 bis 5 zur Herstellung von thermoplastischen Formmassen.

**8.** Thermoplastische Formassen, enthaltend als wesentliche Komponenten

A) 5 bis 95 Gew.-% mindestens eines schlagzäh modifizierenden Polymeren gemäß den Ansprüchen 1 bis 5

B) 5 bis 95 Gew.-%, mindestens eines thermoplastischen Copolymerisats, aufgebaut aus

$b_1$) 50 bis 95 Gew.-% Styrol oder substituierten Styrolen der allgemeinen Formel I oder Methylmethacrylat oder deren Mischungen

$b_2$) 5 bis 50 Gew.-% Acrylnitril, Methacrylnitril, Methylmethacrylat, Maleinsäureanhydrid oder deren Mischungen

C) 0 bis 90 Gew.-% mindestens eines Polycarbonats

D) 0 bis 90 Gew.-% faser- oder teilchenförmige Füllstoffe oder deren Mischungen.

**9.** Verwendung der thermoplastischen Formmassen gemäß Anspruch 8 zur Herstellung von Fasern, Folien und Formkörpern.

**10.** Formkörper, erhältlich aus den thermoplastischen Formmassen gemäß Anspruch 8 als wesentliche Komponente.

Europäisches Patentamt

# EUROPÄISCHER RECHERCHENBERICHT

Nummer der Anmeldung

EP 92 11 3313

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | EP-A-0 084 837 (MITSUBISHI MONSANTO CHEMICAL CY.)<br>Ganses dokument<br>----- | 1-10 | C08F6/22<br>C08F6/24 |
| | | | **RECHERCHIERTE SACHGEBIETE (Int. Cl.5 )** |
| | | | C08F |

Der vorliegende Recherchenbericht wurde für alle Patentansprüche erstellt

| Recherchenort | Abschlußdatum der Recherche | Prüfer |
|---|---|---|
| DEN HAAG | 20 OKTOBER 1992 | MEULEMANS R.A.M. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument